# EUROPEAN PATENT APPLICATION

(11) **EP 1 755 294 A1**
(43) Date of publication of application: **21.02.2007**
(21) Application number: 05016338.5
(22) Date of filing: 27.07.2005
(51) Int. Cl.: H04L 12/58, G06Q 10/00

(54) **System and method for sharing an e-mail address book**

(71) Applicant: Wu, Chao-Hung, Hsin-Tien City, Taipei (TW)
(72) Inventor: Wu, Chao-Hung, Hsin-Tien City, Taipei (TW)
(74) Representative: Viering, Jentschura & Partner

(57) **Abstract**

An electronic mailbox address book sharing system and a method for the same are proposed. The address book sharing system has an electronic mail server and a plurality of client computers. The electronic mail server has an address book, including a public address book database and a private address book database, whereby the electronic mail server grants permission to access the public and private access books.

## Description

### BACKGROUND OF THE INVENTION

### 1. Field of the invention

The present invention relates to an electronic mailbox address book sharing system and a method for the same and, more particularly, to an address book sharing system and a method for sharing an address book with other computers.

### 2. Description of Related Art

Along with the development of the Internet, transmission of network information is substantially replacing transmission of conventional written documents. Among the transmission techniques of network information, E-mail is the most popular, and is widely used by various companies, families and individuals. The reason why E-mail is much appreciated is that it can provide convenient, quick and borderless communication. The contents can include multimedia information and can be transmitted to a large number of receivers. These advantages make E-mail an indispensable transmission medium in the information era.

For address books used in existent electronic mailboxes such as Outlook Express from Microsoft Inc., a computer user is allowed to build his own address book and also allowed to arbitrarily add, delete or modify the contents and data of this address book. For a company, however, the data of address books in computers of its employees are very important, because the address books can record private mailing lists of the employees and also mailing lists of important customers of the company. The safety of the mailing lists of these important customers is in doubt, because anyone can add to, delete from, or otherwise modify the mailing lists. In particular, when an employee leaves a company, he can easily delete the mailing lists of important customers of the company in the address book, hence causing the company much trouble. Besides, the address book in each computer is separately accessed but cannot be shared with other computers.

### SUMMARY OF THE INVENTION

An object of the present invention is to provide an electronic mailbox address book sharing system and a method for the same so that mailing lists recorded in an address book can be shared with other computers. This address book can provide determination of access permissions to enhance the safety of data stored therein.

To achieve the above object, the present invention provides an electronic mailbox address book sharing system, which comprises an electronic mail server and a plurality of client computers. The electronic mail server has an address book. These client computers log into the electronic mail server via a network. The electronic mail server provides access to and use of the address book to these client computers.

The present invention also provides an electronic mailbox address book sharing method, which comprises the steps of: providing an electronic mail server with an address book; providing a plurality of client computers that log into the electronic mail server via a network; and using the electronic mail server to provide access to and use of the address book to the client computers when the client computers log into the electronic mail server.

By using the electronic mailbox address book sharing system and the method for the same, the address book can be stored in the electronic mail server, and the client computers can log into the electronic mail server to read the address book, thereby sharing the data of the address book.

### BRIEF DESCRIPTION OF THE DRAWINGS

The various objects and advantages of the present invention will be more readily understood from the following detailed description when read in conjunction with the appended drawing, in which:
Fig. 1 is a system architecture diagram according to a preferred embodiment of the present invention;
Fig. 2 is a flowchart for sharing an address book according to a preferred embodiment of the present invention;
Fig. 3 shows an address book sharing frame displayed at a client computer of the present invention;
Fig. 4 shows an address book permission setting frame displayed on a client computer of the present invention;
Fig. 5 shows the frame displayed after the adding option in the address book permission setting frame of Fig. 4 is selected; and
Fig. 6 shows a full-text search frame of the present invention.

### DETAILED DESCRIPTION OF THE PREFERRED EMBODIMENTS

The internal mail management of a company is usually accomplished by using an electronic mail server to send and receive mail. The address book of customer name lists is usually stored in each client computer. The address book cannot be shared, and is difficult to manage. In consideration of the above factors, the present invention builds the address book in an electronic mail server for overall planning and management.

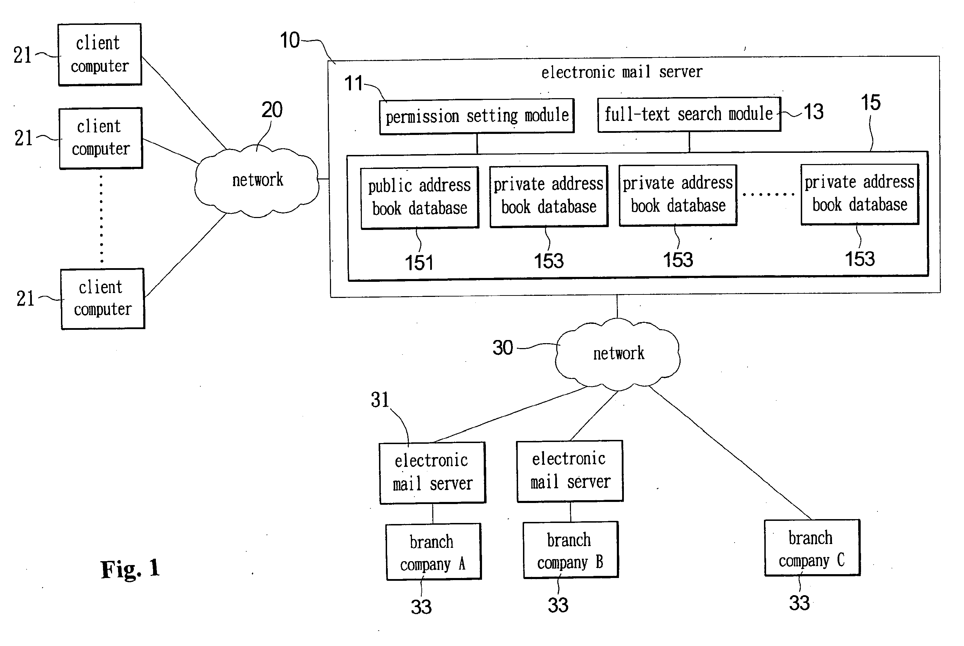

As shown in Fig. 1, the present invention provides an electronic mailbox address book sharing system, which is established on a client/server architecture platform. In this embodiment, an electronic mail server 10 (a first electronic mail server) and a plurality of client computers 21 are provided in the head office. The client computers 21 can send, receive, and manage mail with the electronic mail server 10 via a network 20. Client computers (not shown) of other branch companies 33 can also send, receive, and manage mail with the electronic mail server 10 via a network 30. In this embodiment, in addition sending and receiving mail, the electronic mail server 10 also allows address book sharing. In this embodiment, the network 20 is an intranet, while the network 30 belongs to the Internet. An electronic mail server 31 (a second electronic mail server) can also be provided between a branch company 33 and the network 30 so that the branch company 33 is connected to the electronic mail server 31. The electronic mail server 31 primarily provides sending and receiving of electronic mail messages, but does not provide address book sharing. In this embodiment, the branch companies 33 can also be taken as a plurality of client groups composed of client computers.

In this embodiment, the electronic mail server 10 is an Internet protocol mail server. When the present invention is used, each client computer 21 can log into the electronic mail server 10 via the network 20, and address data stored in the electronic mail server 10 can be shared with each client computer 21. The client computers in the branch companies 33 can also log into the electronic mail server 10 via the network 30, and address data stored in the electronic mail server 10 can be shared with the client computers of the branch companies 33.

In this embodiment, the electronic mail server 10 has a permission granting module 11, a full-text search module 13 and an address book 15. The address book 15 further includes a public address book database 151 and a plurality of private address book database 153. The public address book database 151 stores shared mailing lists of public address book data that can be read by each client computer 21 and the client computers of the branch companies. The private address book database 153 stores private mailing lists of private address book data. Each client computer or each client computer of the branch companies corresponds to a private address book database 153, and each client computer has its own exclusive private address book.

The permission granting module 11 can grant client computers permission to access data stored in the public address book database 151 and the private address book database 153 in the address book 15. Different levels of access include reading access, adding access, modifying access and/or deleting access. The permission granting module 11 identifies a client computer through the name of the client computer. When the permission granting module 11 performs content setting, the electronic mail server 10 asks the logging-in client computer to input a password. The client computer can access the contents of the permission granting module I 1 only if the input password is correct. In this embodiment, each client computer is set to have reading access and adding access to the public address book database 151 to achieve address book sharing. The permission granting module 11 sets each private address book database 153 to correspond to a client computer, which has reading access and adding access to the private address book database 153 and can store private address book data into the private address book database 153. The permission granting module 11 can also make all access to the address book 15 open to specific client computers for maintenance and management of data stored in the public address book database 151 and the private address book databases 153.

On the other hand, when there is a great deal of address data stored in the address book 15, searching for address data in one list after another takes a lot of time. The full-text search module 13 allows the user to set search conditions for finding matched data in the public address book database 151.

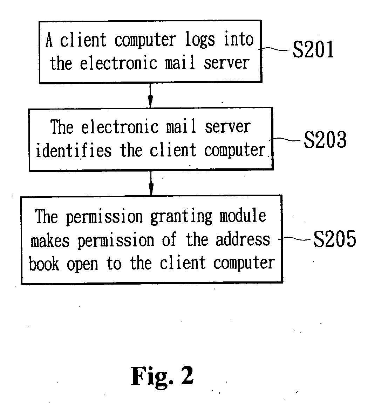

Fig. 2 shows a flowchart for sharing an address book according to a preferred embodiment of the present invention. The flowchart comprises the following steps. First, a client computer logs into the electronic mail server 10 (Step S201). Next, the electronic mail server 10 identifies the logging-in client computer (Step S203). The electronic mail server 10 uses the name of the client computer to identify the client computer. After the electronic mail server 10 identifies the client computer, access to the address book is granted to the logging-in computer according to the set content of the permission granting module 11 (Step S205). In this embodiment, the client computer logging into the electronic mail server 10 can read and add to data stored in the public address book database 151. Similarly, the client computer can read and add to data stored in its corresponding private address book database 153.

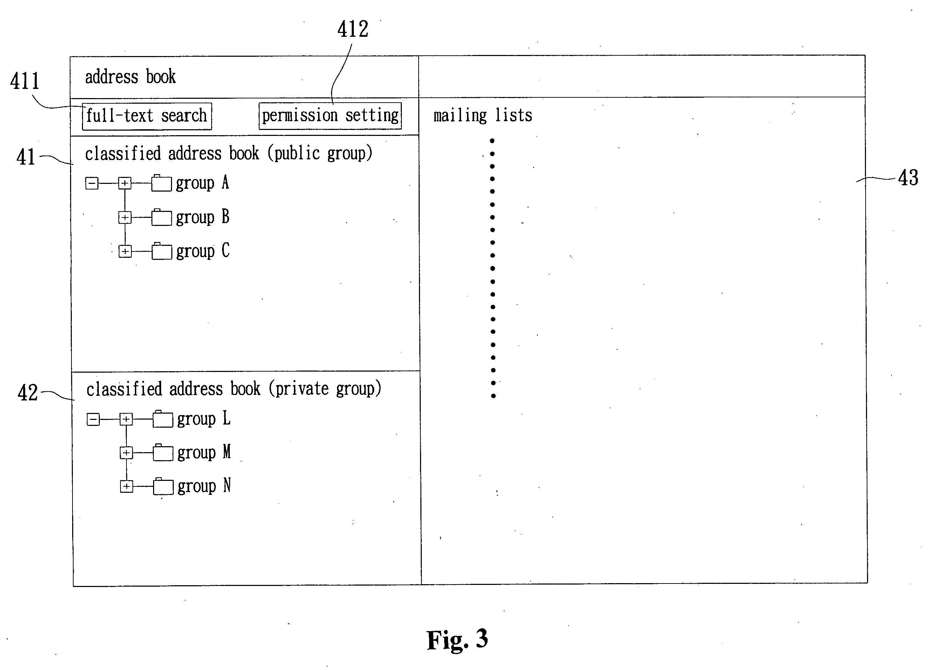

Fig. 3 shows an address book sharing frame displayed on a client computer of the present invention. The address book sharing frame includes a public address book display window 41, a private address book display window 42 and a mailing list display window 43. The public address book display window 41 is used to display data of the public address book database 151 in the electronic mail server 10. When a client computer logs into the electronic mail server 10, the public address book display window 41 will display data of the public address book database 151. Whether the client computer can read, add to, modify or delete data in the public address book database 151 is determined by the permission granting module 11. The public address book display window 41 classifies mailing lists in groups (but is not limited in this way) for quick searches of public mailing lists. The public address book display window 41 also provides a full-text search option 411 and a permission setting option 412. The private address book display window 42 is used to display data of a private address book database 153 in the electronic mail server 10 corresponding to the client computer. The private address book display window 42 also classifies mailing lists in groups (but is not limited in this way). The mailing list display window 43 displays all mailing lists in a group selected by the public address book display window 41 or the private address book display window 42.

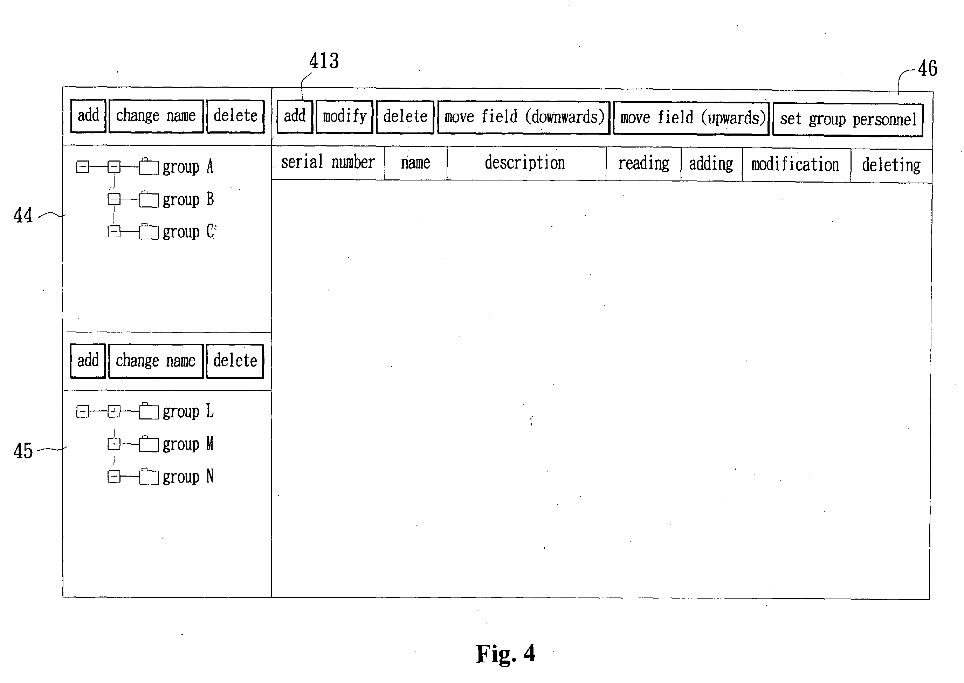

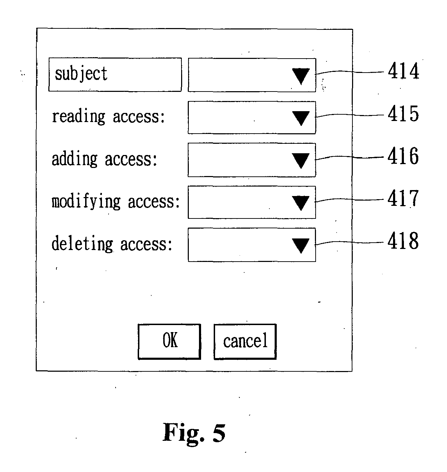

When the permission setting option 412 is selected for execution, the client computer is asked to input a password for the electronic mail server 10 to determine whether the user of the client computer has permission to change the set content of the permission granting module 11. If the input password is correct, the frame of Fig. 4 will be displayed. This frame includes a public address book edit window 44, a private address book edit window 45 and a permission setting edit window 46. Both the public address book edit window 44 and the private address book edit window 45 provide function options of Add, Change Name, and Delete used to edit the group data displayed in the public address book edit window 44 and the private address book edit window 45. The permission setting edit window 46 is used to edit reading, adding, modification, and deleting access of the client computer to data stored in the address book 15. For instance, if an adding option 413 in the permission setting edit window 46 is selected, the frame of Fig. 5 will be displayed. Of course, before selecting the adding option 413, the user needs to first select a group or a branch group in a group of the public address book edit window 44 or the private address book edit window 45. In a subject field 414, a client computer or a group (composed of a plurality of client computers) can be selected. A reading access field 415, a modifying access field 417, and a deleting access field 418 provide function options of Own, All, and None. An adding access field 416 provides function options of Allowed and Disallowed.

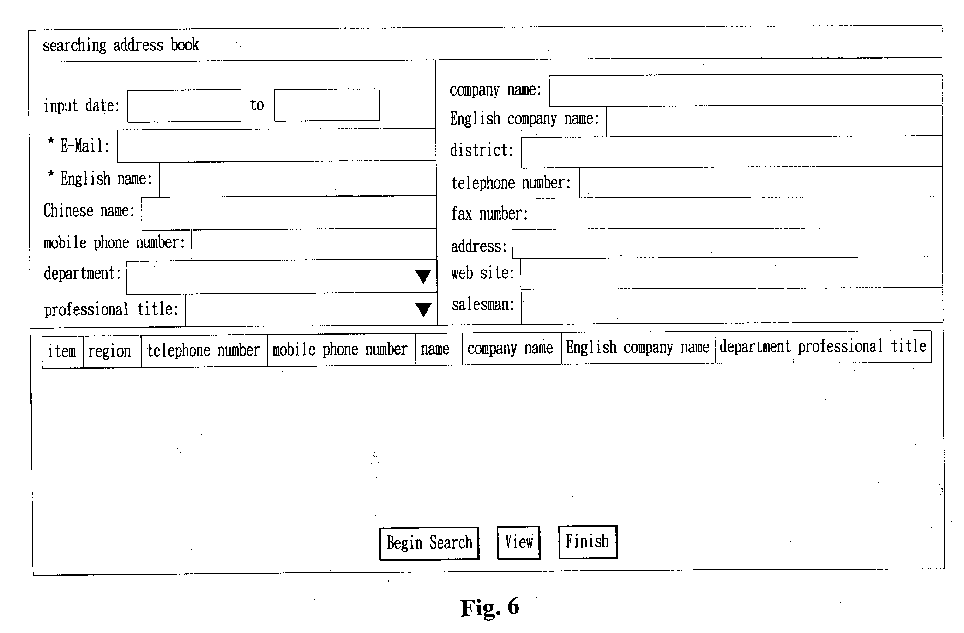

In Fig. 3, when the full-text search option 411 is selected, the frame of Fig. 6 will be displayed, in which several search fields are provided. The user can input keywords in different search fields to find put demanded mailing lists in the address book 15.

To sum up, the present invention provides an electronic mailbox address book sharing system and a method for the same. Public and private mailing lists in address data are stored in the electronic mail server 10. Every client computer can log into the electronic mail server 10 for access (e.g., reading, adding, modifying and deleting) to address data, hence accomplishing address book sharing. Besides, in order to ensure the safety and integrity of data stored in the address book 15 in the electronic mail server 10, not every client computer can read or edit data in the address book 15 in the electronic mail server 10. Instead, the permission granting module 11 is used to provide a decision mechanism. Only the client computers having permission can read or edit address data stored in the address book 15 in the electronic mail server 10.

Although the present invention has been described with reference to the preferred embodiment thereof, it will be understood that the invention is not limited to the details thereof. Various substitutions and modifications have been suggested in the foregoing description, and other will occur to those of ordinary skill in the art. Therefore, all such substitutions and modifications are intended to be embraced within the scope of the invention as defined in the appended claims.

## Claims

1. An electronic mailbox address book sharing system comprising:
an electronic mail server having an address book; and
a plurality of client computers, said client computers logging into said electronic mail server via a network;
whereby said electronic mail server grants permission to access said address book for said client computers.

2. The electronic mailbox address book sharing system as claimed in claim 1, wherein said electronic mail server is an Internet protocol mail server.

3. The electronic mailbox address book sharing system as claimed in claim 1, wherein said address book has a public address book database for storing a plurality of shared mailing lists.

4. The electronic mailbox address book sharing system as claimed in claim 3, wherein said electronic mail server further comprises a permission granting module for setting access of said client computers to data stored in said public address book database, wherein said access includes reading access, adding access, modifying access and/or deleting access.

5. The electronic mailbox address book sharing system as claimed in claim 3, wherein said address book further has a plurality of private address book databases each corresponding to one of said client computers so, whereby client computers store private mailing lists.

6. The electronic mailbox address book sharing system as claimed in claim 5, wherein said electronic mail server further comprises a permission granting module for setting reading access, adding access, modifying access and/or deleting access of said client computers to data stored in said public address book database and said private address book databases.

7. The electronic mailbox address book sharing system as claimed in claim 1, wherein said network is an Intranet or the Internet.

8. The electronic mailbox address book sharing system as claimed in claim 1, wherein said electronic mail server further comprises a full-text search module for said client computers to search matched data in said address book by means of setting search conditions.

9. An electronic mailbox address book sharing system, comprising:
a first electronic mail server having an address book;
a plurality of second electronic mail servers, said second electronic mail servers sending and receiving email messages via a network; and
a plurality of client groups composed of a plurality of client computers, wherein each of said client group is connected to one of said second electronic mail servers, and said client computers of said client groups send and receive electronic mail via the connected second electronic mail servers;
whereby said client computers of said client groups log into said first electronic mail server via said network, and said first electronic mail server provides permission to access said address book to said client computers of said client groups.

10. The electronic mailbox address book sharing system as claimed in claim 9, wherein said first electronic mail server is an Internet protocol mail server.

11. The electronic mailbox address book sharing system as claimed in claim 9, wherein said address book has a public address book database for storing a plurality of shared mailing lists.

12. The electronic mailbox address book sharing system as claimed in claim 11, wherein said address book further has a plurality of private address book databases, each corresponding to one of said client computers, whereby said client computers of said client groups store private mailing lists.

13. The electronic mailbox address book sharing system as claimed in claim 12, wherein said first electronic mail server further comprises a permission granting module for setting access of said client computers of said client groups to data stored in said public address book database and said private address book databases, and said access includes reading access, adding access, modifying access and/or deleting access.

14. The electronic mailbox address book sharing system as claimed in claim 9, wherein said first electronic mail server further comprises a full-text search module for said client computers of said client groups to search for matching data in said address book by means of setting search conditions.

15. An electronic mailbox address book sharing method, comprising the steps of:
providing an electronic mail server with an address book;
providing a plurality of client computers, said client computers logging into said electronic mail server via a network; and
using said electronic mail server to provide access to said address book for said client computers when said client computers log into said electronic mail server.

16. The electronic mailbox address book sharing method as claimed in claim 15, wherein said electronic mail server is an Internet protocol mail server.

17. The electronic mailbox address book sharing method as claimed in claim 15, wherein said address book has a public address book database for storing a plurality of shared mailing lists.

18. The electronic mailbox address book sharing method as claimed in claim 17, wherein said electronic mail server further comprises a permission granting module for granting access to said client computers to data stored in said public address book database, wherein said access includes reading access, adding access, modifying access and/or deleting access.

19. The electronic mailbox address book sharing method as claimed in claim 18, wherein when said client computers log into said electronic mail server, said electronic mail server identifies names of said client computers to determine whether said client computers are set in said permission granting module.

20. The electronic mailbox address book sharing method as claimed in claim 15, wherein said address book further has a plurality of private address book databases, each corresponding to one of said client computers, whereby said client computers store private mailing lists.

21. The electronic mailbox address book sharing method as claimed in claim 20, wherein said electronic mail server further comprises a permission granting module for granting access to said client computers to data stored in said public address book database and said private address book databases, and said operation access includes reading access, adding access, modifying access and/or deleting access.

22. The electronic mailbox address book sharing method as claimed in claim 21, wherein when said client computers log into said electronic mail server, said electronic mail server identifies names of said client computers to determine whether said client computers are set in said permission granting module.

23. The electronic mailbox address book sharing method as claimed in claim 15, wherein said network is an intranet or the Internet.

24. The electronic mailbox address book sharing method as claimed in claim 15, further comprising a step of providing a full-text search module for said client computers to search for matching data in said address book by means of setting search conditions when said client computers log into said electronic mail server.

25. An electronic mailbox address book sharing method applicable to a plurality of client groups composed of a plurality of client computers, said method comprising the steps of:
providing a first electronic mail server with an address book;
providing a plurality of second electronic mail servers, each connected to one of said client groups, said second electronic mail servers sending and
receiving email messages via a network, and said client computers of said client groups sending and receiving electronic mail via the connected second electronic mail servers; and
using said first electronic mail server to provide access to said address book for said client computers of said client groups when said client computers of said client groups log into said first electronic mail server.

26. The electronic mailbox address book sharing method as claimed in claim 25, wherein said first electronic mail server is an Internet protocol mail server.

27. The electronic mailbox address book sharing method as claimed in claim 25, wherein said address book has a public address book database for storing a plurality of shared mailing lists.

28. The electronic mailbox address book sharing method as claimed in claim 27, wherein said address book further has a plurality of private address book databases, each corresponding to one of said client computers, whereby said client computers store private mailing lists.

29. The electronic mailbox address book sharing method as claimed in claim 28, wherein said first electronic mail server further comprises a permission granting module for granting access to said client computers to data stored in said public address book database and said private address book databases, and said access includes reading access, adding access, modifying access and/or deleting access.

30. The electronic mailbox address book sharing method as claimed in claim 29, wherein when said client computers log into said first electronic mail server, said first electronic mail server identifies names of said client computers to determine whether said client computers are set in said permission setting module.

31. The electronic mailbox address book sharing method as claimed in claim 25, further comprising a step of providing a full-text search module for said client computers to search for matching data in said address book by means of setting search conditions when said client computers log into said first electronic mail server.
